# EUROPÄISCHE PATENTSCHRIFT

(11) **EP 2 308 357 B1**
(45) Veröffentlichungstag und Bekanntmachung des Hinweises auf die Patenterteilung: **27.06.2012**
(21) Anmeldenummer: 10174826.7
(22) Anmeldetag: 01.09.2010
(51) Int. Cl.: A47G 25/06, F16B 45/00

(54) **Garderobenleiste**
Wardrobe bar
Baguette de garde-robe

(30) Priorität: 12.10.2009 DE 102009049157
(43) Veröffentlichungstag der Anmeldung: 13.04.2011
(73) Patentinhaber: Kuhn, Joachim, Taipei (TW); Huang, Shu-Pei, Neihu, Taipei (CN)
(72) Erfinder: Kuhn, Joachim, Taipei (TW); Huang, Shu-Pei, Neihu, Taipei (CN)
(74) Vertreter: WOLF & LUTZ

(56) Entgegenhaltungen:
- DE-U1- 29 802 512
- FR-A1- 2 708 447
- US-A1- 2003 106 868
- US-B1- 6 223 914
- US-B1- 6 457 922

## Beschreibung

Die Erfindung betrifft eine Garderobenleiste für eine hängende Aufbewahrung insbesondere von Toilettenartikeln, wie Handtüchern, Lappen, Bürsten oder dergleichen oder auch von Kleidungsstücken, die jeweils an Hakenelementen einhängbar sind, die ihrerseits an einem der Grundform nach flachstabförmigen Hakenträger befestigbar sind, der seinerseits an einer Tür oder einem plattenförmigen Möbelteil verankerbar ist, wobei die Hakenelemente mütterliche Elemente von Schraubverbindungen bilden, mittels derer sie an dem Hakenträger lösbar fest verbindbar sind und andererseits der Hakenträger an dem ihn tragenden Teil - Tür oder Möbelteil - verankerbar ist, und mit den weiteren Merkmalen des Patentanspruchs 1.

Derartige Garderobenleisten sind allgemein bekannt z.B. aus DE 298 02 512 U1, sei es mit einer Mehrzahl nebeneinander "horizontal" angeordneter Haken oder auch in Form nur eines einzelnen Hakens, der mit einem Gewindeabschnitt in einen in eine Wand eingesetzten Dübel einschraubbar und solchermaßen zugfest und gegen Verdrehung gesichert an der Wand fixierbar ist.

Diese Garderobenleisten beziehungsweise Haken sind hinsichtlich ihrer Gestaltung jeweils durch die vorgesehene Art der Verankerung geprägt und sind daher, z.B. nach einem Umzug, vielfach nicht mehr verwendbar.

Aufgabe der Erfindung ist es daher, eine Garderobenleiste der eingangs genannten Art anzugeben, die nach einem Lösen ihrer Verankerung ohne weiteres wieder einer Verwendung auch in einer anderen Art der Verankerung an einer Gebäudewand oder einem Möbelstück zugänglich ist.

Diese Aufgabe wird, dem Grundgedanken nach dadurch gelöst, dass die Hakenelemente mütterliche Elemente von Schraubverbindungen bilden, mittels derer sie mit dem Hakenträger lösbar verbindbar sind und andererseits der Hakenträger an dem ihn tragendes Teil - Tür oder Möbelteil - verankerbar ist.

Durch die hiernach genutzte Doppelfunktion der Hakenelemente ist es möglich, den Hakenträger selbst als wichtigstes Teil der Garderobenleiste sowohl für die eine wie auch für die andere Art der Verankerung zu nutzen, was sowohl unter dem Gesichtspunkt einer Erstanschaffung als auch unter dem Gesichtspunkt einer Weiterverwendung einer Garderobenleiste, z.B. nach einem Umzug, vorteilhaft ist.

Durch die Merkmale des Anspruchs 1 ist eine Gestaltung der Garderobenleiste und ihrer Verankerungselemente angegeben, die sich für ein Einhängen, z.B. an der oberen Querkante einer Tür, sei es eine Zimmertür oder eine Schranktür, eignet.

Weitere Einzelheiten erfindungsgemäßer Garderobenleisten ergeben sich aus der nachfolgenden Beschreibung spezieller Ausführungsbeispiele anhand der Zeichnungen. Es zeigen:
- Fig. 1: eine Garderobenleiste in schematisch verein- fachter, teilweise abgebrochener Ansicht, gesehen in Richtung der zentralen Längsachsen von Hakenelementen der Gardeoben- leiste, in maßstäblicher Darstellung, etwa im Maßstab 1:1,5,
- Fig. 2a: die Garderobenleiste gemäß Fig. 1, im Schnitt längs der Linie IIa - IIa der Fig. 1 im Maßstab 1:1,
- Fig. 2b: die Garderobenleiste gemäß Fig. 1, im Schnitt längs der Linie IIb - IIb, im Maßstab 1:1,
- Fig. 3a: einen Hakenträger der Garderobenleiste gemäß der Fig. 1 bis 2b in einer der Fig. 1 entsprechenden Ansichtsdarstellung,
- Fig. 3b: eine Verblendung des Hakenträgers gemäß Fig. 3a in einer dieser entsprechenden Darstellung,
- Fig. 4: Einzelhaken eines Hakenelements der Garderobenleiste gemäß den Fig. 1 bis 3b in einem der Fig. 2a, b entsprechenden Schnitt, in gegenüber diesen vergrößertem Maßstab,
- Fig. 5a: die Verankerung einer erfindungsgemäßen Garderobenleiste an der Oberkante einer Tür mittels eines U-Profilbügels in einer der Fig. 2a entsprechenden Darstellung,
- Fig. 5b: den U-Profilbügel der Garderobenleiste gemäß Fig. 5a, gesehen in Richtung des Pfeiles Vb derselben und
- Fig. 5c: ein Detail des U-Profilbügels gemäß Fig. 5a in vergrößertem Maß- stab, im Schnitt längs der Linie Vc - Vc der Fig. 5b.

ßei den Ausführungsbeispielen gemäβ Zeichnungen 1 - 4 handelt es sich nicht um einen Teil der Erfindung, sondern um Beispiele aus dem Stand der Technik.

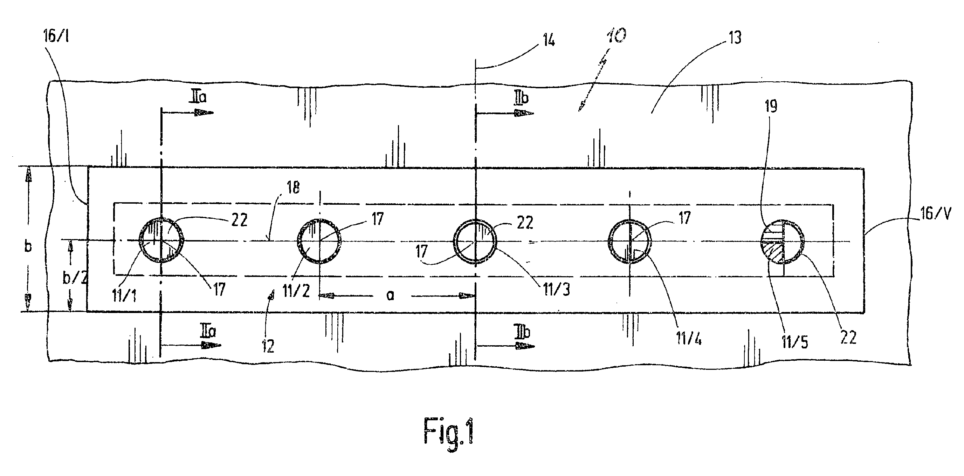

Die in der Fig. 1 insgesamt mit 10 bezeichnete Garderobenleiste umfasst beim dargestellten, speziellen Ausführungsbeispiel fünf Hakenelemente 11/1 bis 11/5, die an einem der Grundform nach flachstabförmigen, gemäß der Ansichtsdarstellung der Fig. 1 lang gestreckt rechteckigen Hakenträge 12 fixierbar und zusammen mit diesem an einer schematisch angedeuteten Gebäudewand 13 verankerbar sind.

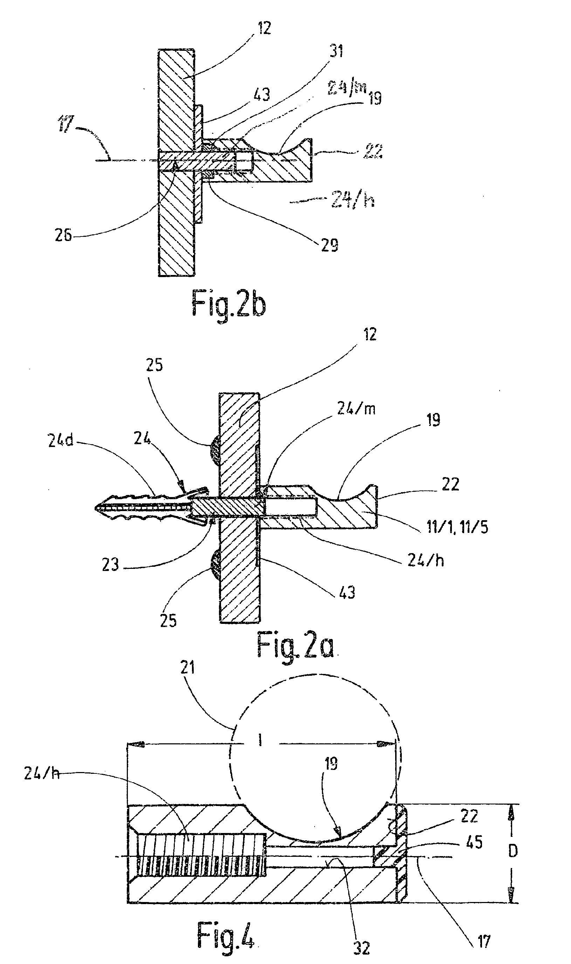

Die Anordnung der Hakenelemente 11/1 bis 11/5 ist, gesehen in der Gelenkkonfiguration der Garderobenleiste 10, symmetrisch bezüglich der senkrecht zur Gebäudewand 13 verlaufenden, vertikalen Mittelebene 14 des Hakenträgers 12, der seinerseits zu dieser Ebene 14 symmetrisch ist. Die Hakenelemente sind als im Wesentlichen kreiszylindrische Bolzen ausgebildet, deren axiale Ausdehnung I (Fig. 4) etwa dem Dreifachen ihres Durchmessers D entspricht.

Die Hakenelemente 11/1 bis 11/5 sind an dem Hakenträger in gleichen Abständen a voneinander angeordnet, wobei der Abstand der beiden äußeren Hakenelemente 11/1 und 11 /5 vom jeweils benachbarten Querrand 16/l beziehungsweise 16/r des Hakenträgers 12 geringfügig kleiner ist als die Hälfte des Abstandes a je zweier benachbarter Hakenelemente voneinander. Mit der durch die zentralen Achsen 17 der zylindrischen Hakenelemente 11/1 bis 11/5 aufgespannte Ebene 18 fällt auch die Längsmittelebene der Gesamtanordnung von Hakenelementen und Hakenträger zusammen.

Zum Einhängen von z.B. von Kleidungsstücken oder Tüchern mittels eigens an diesen vorgesehener Aufhänger sind an den Hakenelementen 11/1 bis 11/5 nach oben offene Vertiefungen 19 vorgesehen, deren Begrenzungsfläche der Schnittfläche des zylindrischen Hakenkörpers mit einem gestrichelt angedeuteten Zylinder 21 (Fig. 4) entspricht, dessen Durchmesser signifikant größer ist als der Durchmesser D des jeweiligen Hakenelements 11/1 bis 11/5, so dass sich der der Fig. 4 entnehmbare Konturenverlauf der Vertiefung 19 und deren Anordnung bezüglich der kreisförmigen freien Endstimfläche 22 des jeweiligen Hakenelements ergibt.

Der Hakenträger 12 ist im Bereich der beiden äußeren Hakenelemente 11/1 und 11/5 der aus der Fig. 2a ersichtlichen Art mit Hilfe von insgesamt mit 23 bezeichneten Stockschrauben in Wanddübeln 24, die in diesen zugeordneten Dübelbohrungen der Gebäudewand 13 eingesetzt sind, belastungssicher verankert. Diese Stockschrauben haben einen mit dem Dübel 24 in Eingriff bringbaren in der Art eines Holzgewindes ausgebildeten Dübelgewindeabschnitt 24/d und einen außerhalb des Dübels angeordneten Maschinengewindeabschnitt 24/m mit metrischem Gewinde, auf den als Befestigungsmutter, mit der der Hakenträger 12 an die Gebäudewand 13 andrückbar ist, das zugeordnete Hakenelement 11/1 aufschraubbar ist, das mit einem zu dem Maschinengewindeabschnitt 24/m komplementären Innengewinde 24/h versehen ist. Die beiden Gewinde 24/d und 24/m der Stockschraube 23 sind gleichsinnig ausgebildet, haben jedoch verschiedene Steigungen, wobei die Steigung des mit dem Hakenelement in Eingriff bringbaren Maschinengewindes 24/m kleiner ist als diejenige des Dübelgewindeabschnitts 24/d.

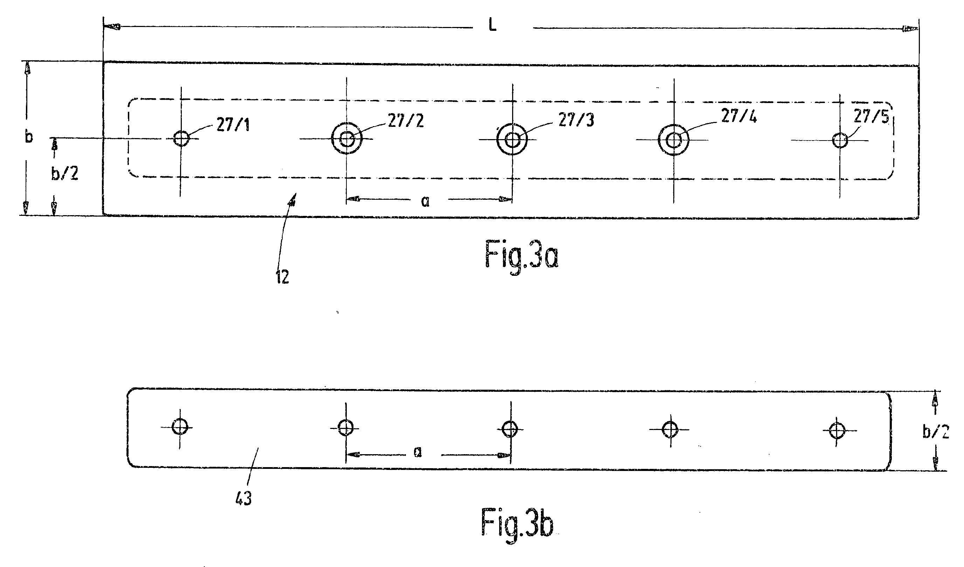

Bevor die Verankerung des Hakenträgers 12 an der Wand 13 erfolgt, werden die zwischen den beiden äußeren Hakenelementen 12/1 und 12/5 angeordneten inneren Hakenelemente 11/2, 11/3 und 11/4 an dem Hakenträger 12 unter Verwendung von Senkkopfschrauben 26 (Fig. 2b) festgelegt, die sich mit ihren Köpfen in entsprechenden Einsenkungen der der Gebäudewand zugeordneten Seite des Hakenträgers 12 abstützen und durch entsprechend angeordnete Bohrungen 27/2, 27/3 und 27/4 (Fig. 3a) des Hakenträgers 12 hindurch treten, auf welche die Hakenelemente 11/2, 11/3 und 11/4 aufschraubbar sind. Hiernach wird der Hakenträger an der Wand angesetzt, wonach die äußeren Hakenelemente 11/1 und 11/5 zum Anpressen des Hakenträgers an die Gebäudewand auf die aus den äußeren Bohrungen 27/1 und 27/5 des Hakenträgers 12 herausragenden Maschinengewindeabschnitte 24/m der beiden Stockschrauben 23 aufschraubbar sind.

Damit hierbei sichergestellt ist, dass auch die beiden äußeren Hakenelemente 11/1 und 11/5 in diejenige Position gedreht werden können, in der ihre Einhäng-Vertiefungen 19 mit denjenigen der inneren Hakenelemente 11/2 bis 11/4 koaxial ausgerichtet sind, sind an der der Gebäudewand 13 zugewandten Seite des Hakenträgers Gummipuffer 25 mindestens im Bereich der zur Verankerung genutzten Schraubverbindungen vorgesehen, die in Richtung der Schraubenachse gesehen, eine Deformation erlauben, die mindestens der Steigung des Maschinengewindes 24/m der Stockschraube 23 entspricht. Hierdurch wird sichergestellt, dass das jeweilige Hakenelement 11/1 bzw. 11/5 unabhängig von der Orientierung, in der es beim Andrücken an die Sichtseite des Hakenträgers, wenn dieser seinerseits mit der Wand in Berührung steht, in Anlage gelangt, auf jeden Fall um denjenigen Winkelbetrag weitergedreht werden kann, der in die mit den weiteren Haken-Vertiefungen fluchtende Anordnung seiner Hakenausnehmung führt.

Alternativ oder zusätzlich zu den Pufferelementen 25, die an der den Hakenelementen 11/1 bis 11/5 abgewandten Seite des Hakenträgers 12 angeordnet sind, können funktionell entsprechende Pufferelemente auch, wie schematisch in der Fig. 2b angedeutet, als ringförmige gummielastische Körper 29 ausgebildet sein, die zwischen dem jeweiligen Hakenelement 11/1 oder 11/5 und der diesen zugewandten Seite des Hakenträgers 12 angeordnet sind. Derartige ringförmige Pufferkörper können in koaxialer Anordnung mit der zentralen Achse 17 des jeweiligen Hakenelements 11/1 bzw. 11/5 an einer ringförmigen Stufe 31 (Fig. 2b) des Hakenelements abgestützt sein, durch die das Innengewinde 24/h gegenüber einem hülsenförmigen radial äußeren, dem Hakenträger 12 zugewandten Abschnitt des jeweiligen Hakenelements abgesetzt ist.

Die zur Verankerung genutzten Stockschrauben 23 sind in an sich bekannter Technik mit Imbus- oder Torx- oder hiermit äquivalenten Antrieben versehen, zu deren Betätigung schlanke Dreh-Werkzeuge geeignet sind, deren Durchmesser signifikant kleiner ist als der Nenn-Durchmesser der Stockschrauben 23. Demgemäß kann, wie in der Fig. 4 gestrichelt angedeutet, das jeweilige Hakenelement 11/1 oder 11/5, das zur Verankerung des Hakenträgers an einer Gebäudewand genutzt ist, mit einem sich zwischen dem Gewinde 24/h und der diesem abgewandten freien Endstirnfläche 22 des Hakenelements erstreckender Kanal 32 versehen sein, durch den hindurch ein Betätigungswerkzeug an der Stockschraube angreifen kann, sei es im Sinne einer Lockerung der Abstützung des Hakenelements an dem Hakenträger 12 oder im Sinne einer Erhöhung der Spannung, mit der das Hakenelement an den Hakenträger 12 im fixierten Zustand angedrückt ist.

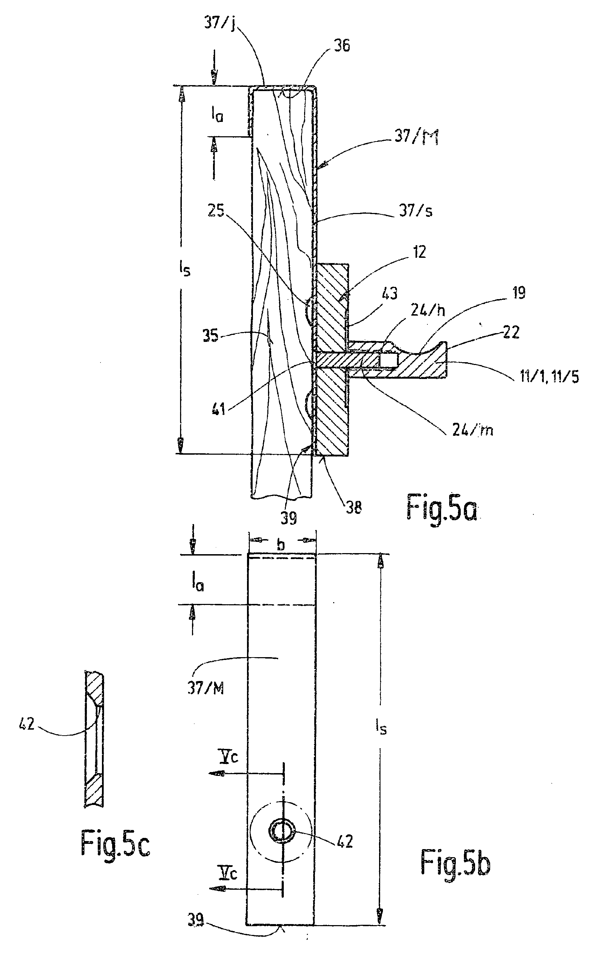

Die Garderobenleiste 10/h gemäß den Fig. 5a bis 5c unterscheidet sich von der anhand der Fig. 1 bis 4 geschilderten im Wesentlichen nur durch die Art ihrer Verankerung an einem lediglich schematisch angedeuteten vertikal aufragenden plattenförmigen Möbel- oder Gebäudeteil 35, z.B. einer Tür oder eines plattenförmigen Raumteilers, der eine freie, obere horizontale schmale Stirnfläche 36 hat, an welcher der Hakenträger 12 mittels eines aus einem relativ schmalen Metallflachstab gebogenen, insgesamt mit 37/M bezeichneten U-Profils über dessen Jochschenkels 37/j abgestützt und dadurch an dem Möbelteil 35 hängend verankert ist. Die Länge Iₛ des sichtseitig angeordneten Profilschenkels 37/s, an dessen freiem Endabschnitt der Hakenträger 12 fixiert ist, ist signifikant größer als die Länge Iₐ des an den gegenüberliegenden Seite angeordneten, dem Hakenträger 12 abgewandten Profilschenkels 37/a, wobei das Verhältnis Iₛ/Iₐ einen Wert zwischen fünf und zehn, vorzugsweise einen Wert um acht hat. Die Breite b des Metallstreifens 37/M (Fig. 5b), aus dem das U-Profil gebogen ist, entspricht etwa der Länge Ia des kürzeren Profilschenkels oder ist etwas größer als diese. Die Dicke des Metallstreifens, der aus Eisenblech oder aus Aluminium bestehen kann, beträgt ca. 1,2 bis 1,5 mm.

Der Hakenträger 12 ist an dem längeren Profilschenkel 37/s derart befestigt, dass seine untere Querkante 38 geringfügig, z.B. 1 mm unterhalb der unteren Querkante 39 des längeren Profilschenkels 37/s verläuft, so dass diese nicht sichtbar ist. Der untere Endabschnitt des längeren Profilschenkels 37/s ist wieder über elastische Puffer 25, die den anhand der Fig. 2a geschilderten völlig analog sind, an dem plattenförmigen Möbelteil 35 abgestützt.

Zur Befestigung des U-Profils 37, des Hakenträgers 12 und des jeweils als Mutterschraube genutzten Hakenelements 11 aneinander ist jeweils eine Senkkopfschraube 41 vorgesehen, die an einer konischen Randbegrenzung 45 (Fig. 5c) einer Bohrung 42 des längeren U-Profilschenkels 37/s mit ihrem Kopf axial abgestützt ist und mit ihrem Gewinde in Eingriff mit dem Innengewinde 24/h des als Mutter genutzten Hakenelements 11 steht.

Sowohl beim Ausführungsbeispiel gemäß den Fig. 1 bis 4 als auch beim Ausführungsbeispiel gemäß den Fig. 5b bis 5c sind die Hakenelemente 11/1 bis 11/5 an aus Kunststoff oder Metall bestehenden, streifenförmigen Verkleidungen 43 (Fig. 3b) abgestützt, die, je nach Beschaffenheit des flachstabförmigen Hakenträgers 12 lediglich an dessen Sichtseite aufliegen, wie in der Fig. 2b dargestellt, oder, wie den Fig. 2a und 5a entnehmbar, in diesen eingelassen sind.

In einer speziellen, jedoch typischen Gestaltung der Garderobenleiste 10, wie anhand der Fig. 1 bis 5c erläutert, hat deren Trägerkörper 12, der aus Holz, Kunststoff oder Glas bestehen kann, eine Länge L von 300 mm, eine Breite b von 60 mm und eine Dicke von 10 mm. Die zur Fixierung der Hakenelemente an dem Hakenträger 12 genutzten Schrauben sind M5-Schrauben, desgleichen der äußere Gewindeabschnitt 24/m der Stockschrauben 23. Die zylindrischen Hakenelemente 11/1 bis 11/5 haben eine Länge von 30 mm und einen Durchmesser von 11 mm.

## Patentansprüche

1. Garderobenleiste (10) für eine hängende Aufbewahrung von Kleidungsstücken, Handtüchern und dergleichen, mit einem flachstabförmigen Hakenträger und mindestens einem an dem Hakenträger (12) fixierten Hakenelement (11/1 bis 11/5) sowie mit Verankerungsmitteln zur Verankerung des Hakenträgers an einer Tür oder einem plattenförmigen Möbelteil (25), wobei mindestens ein Hakenelement (11/1 bis 11/5) vorgesehen ist, das ein Mutterteil einer Schraubverbindung bildet, die es mit dem Hakenträger (12) lösbar verbindet und wobei die Schraubverbindung auch einen Bestandteil der Verankerungsmittel bildet, **dadurch gekennzeichnet, dass** zur Verankerung des Hakenträgers (12) an einer Tür oder einem plattenförmigen Möbelteil (25) vorgesehene Verankerungsmittel als an der dem Hakenelement abgewandten Seite des Hakenträgers (12) unter der Einwirkung der Schraubverbindung fixierbare, nach unten offene, der Grundform nach U-förmige Bügel (37) ausgebildet sind.

2. Garderobenleiste nach Anspruch 1, **dadurch gekennzeichnet, dass** das mindestens eine zur Verankerung genutzte Hakenelement (11/1, 11/5) über mindestens ein gummielastisches Pufferelement an dem Hakenträger (12) abstützbar ist.

## Claims

1. Hanging rail (10) on which can be hung items of clothing, handtowels and the like, having a hook carrier in the form of a flat bar, and having at least one hook element (11/1 to 11/5) fixed on the hook carrier (12), and having anchoring means for anchoring the hook carrier on a door or a panel-like furniture part (25), wherein at least one hook element (11/1 to 11/5) is provided, and this forms a nut part of a screw connection, which connects it in a releasable manner to the hook carrier (12), and wherein the screw connection also forms a constituent part of the anchoring means, **characterized in that** anchoring means, which are provided for anchoring the hook carrier (12) on a door or a panel-like furniture part (25), are designed as basically U-shaped brackets (37) which are open in the downward direction and can be fixed, under the action of the screw connection, on that side of the hook carrier (12) which is directed away from the hook element.

2. Hanging rail according to Claim 1, **characterized in that** the at least one hook element (11/1, 11/5) used for anchoring purposes can be supported on the hook carrier (12) via at least one elastomeric buffer element.

## Revendications

1. Baguette de garde-robe (10) pour le rangement sous forme suspendue de vêtements, sacs à main et similaires, comprenant un support à crochets en forme de barre plate et au moins un élément de crochet (11/1 à 11/5) fixé sur le support à crochets (12), ainsi que des moyens d'ancrage pour l'ancrage du support à crochets à une porte ou une partie de meuble (25) en forme de plaque, au moins un élément de crochet (11/1 à 11/5) étant prévu, lequel forme une partie d'écrou d'une connexion vissée, qui relie celui-ci au support à crochets (12) de manière détachable, et la connexion vissée formant aussi un constituant du moyen d'ancrage, **caractérisé en ce que** des moyens d'ancrage prévus pour l'ancrage du support à crochets (12) à une porte ou à une partie de meuble (25) en forme de plaque, sont réalisés sous forme d'étriers (37) en forme de U dans leur forme de base, ouverts vers le bas, pouvant être fixés par l'action de la connexion vissée, sur le côté du support à crochets (12) opposé à l'élément de crochet.

2. Baguette de garde-robe selon la revendication 1, **caractérisée en ce qu'**au moins un élément de crochet (11/1 - 11/5) utilisé pour l'ancrage peut être supporté sur le support à crochets (12) par le biais d'au moins un élément tampon ayant l'élasticité du caoutchouc.
